# EUROPEAN PATENT SPECIFICATION

(11) **EP 4 503 743 B1**
(45) Date of publication and mention of the grant of the patent: **17.06.2026**
(21) Application number: 23778159.6
(22) Date of filing: 28.03.2023
(51) Int. Cl.: H04W 36/28, H04W 24/02, H04W 24/10, H04W 36/00, H04W 76/19, H04W 76/20, H04W 76/27

(54) **COMMUNICATION PROCESSING METHOD, TERMINAL, AND NETWORK SIDE DEVICE**
KOMMUNIKATIONSVERARBEITUNGSVERFAHREN, ENDGERÄT UND NETZWERKSEITIGE VORRICHTUNG
PROCÉDÉ DE TRAITEMENT DE COMMUNICATION, TERMINAL ET DISPOSITIF CÔTÉ RÉSEAU

(30) Priority: 28.03.2022 CN 202210311861
(43) Date of publication of application: 05.02.2025
(73) Proprietor: Vivo Mobile Communication Co., Ltd., Dongguan, Guangdong 523863 (CN)
(72) Inventor: ZHANG, Hongping, Dongguan, Guangdong 523863 (CN)
(74) Representative: Murgitroyd & Company
(86) International application number: PCT/CN2023/084266
(87) International publication number: WO 2023/185794

(56) References cited:
- WO-A1-2020/154622
- WO-A1-2021/026747
- CN-A- 102 123 416
- CN-A- 103 533 589
- CN-A- 106 993 313
- QUALCOMM EUROPE ET AL: "Comparison of control plane and user plane transport solutions for MDT", 3GPP DRAFT; S5-093801 COMPARISON OF UP VS. CP TRANSPORT SOLUTIONS FOR MDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shanghai; 20091109, 9 November 2009 (2009-11-09), XP050399763
- ROELAND DINAND ET AL: "Mobile Networks and Management", vol. 191, 1 January 2017 (2017-01-01), Cham, pages 44 - 57, XP093101138, ISSN: 1867-8211, ISBN: 978-3-319-52712-3, Retrieved from the Internet <URL:https://eudl.eu/pdf/10.1007/978-3-319-52712-3_4> DOI: 10.1007/978-3-319-52712-3_4
- "3rd Generation Partnership Project; Technical Specification Group Radio Access Network; NG-RAN; Architecture description (Release 16)", vol. RAN WG3, no. V16.0.0, 9 January 2020 (2020-01-09), pages 1 - 49, XP051860623, Retrieved from the Internet <URL:ftp://ftp.3gpp.org/Specs/archive/38_series/38.401/38401-g00.zip 38401-g00.doc> [retrieved on 20200109]

## Description

### TECHNICAL FIELD

This application belongs to the field of communication technologies, and specifically, relates to a communication processing method, a terminal, and a network side device.

### BACKGROUND

A mobile communication network is divided into a user plane function and a control plane function. The user plane function is mainly used for supporting transmission of user data (for example, application layer data). The control plane function is mainly used for supporting control signaling transmission, for example, radio resource control (Radio Resource Control, RRC) connection establishment, bearer establishment, and radio resource configuration.

With the development of mobile communication technologies, to better perform network maintenance and management and support some service features, a network further needs to transmit some data in addition to user data and control signaling, for example, data of self-optimizing networks (Self-Optimizing Networks, SONs) or minimization of drive tests (Minimization of Drive Tests, MDTs) obtained from a terminal, and exchanged data of positioning services. Subsequently, the data is collectively referred to as first plane data. Currently, the first plane data has a relatively small data volume, and may be transmitted through the control plane. However, with further development of communication technologies, such as introduction of artificial intelligence (Artificial Intelligence, AI), the network may need to collect more first plane data. If the manner of control plane transmission is still used, existing control signaling transmission is affected (for example, congestion is caused and a delay of control signaling is increased). In addition, because the first plane data is used as the control signaling for transmission, a protocol of the control signaling is more complex.

Because the terminal is mobile, how to support mobility of the first plane is a problem that needs to be resolved.

The 3GPP draft S5-093801 from QUALCOMM EUROPE ET AL: "Comparison of control plane and user plane transport solutions for MDT" discusses the problem having lead to the present application, 1. e., which plane should be used for conveying large amounts of (network) data such as MDT data? Pros and Cons of each solution are herein presented.

ISBN 978-3-319-52712-3 publication from Roeland Dinand ET AL: "Novel Core Network Architecture for 5G Based on Mobile Service Chaining" In: "Mobile Networks and Management" of 1st January 2017 addresses the impact of mobility into user plane and control plane flows or bearers. Although enforcing strict separation between planes.

Patent publication EP 4 503 581 A1 (VIVO MOBILE COMMUNICATION CO LTD [CN]) 5 February 2025 is an intermediate publication representing previous reaearch developments from the authors of the present application.

### SUMMARY

Embodiments of this application provide a communication processing method, a terminal, and a network side device, which can resolve a problem in which communication performance is affected due to mobility of a first plane not being supported in the related art.

According to a first aspect, a communication processing method is provided, including: establishing, by a source network side device, a first plane bearer with a terminal; and in a case that the terminal performs cell handover, radio resource control (RRC) reestablishment, or RRC resume, deleting, by the source network side device, the first plane bearer or maintaining the first plane bearer, where the first plane bearer is configured to transmit data of a first plane, the first plane is configured to transmit data terminating at an internal node of a communication network, and the first plane is different from a control plane and a user plane; and the source network side device is a serving network side device of the terminal before the cell handover, the RRC reestablishment, or the RRC resume.

According to a second aspect, a communication processing method is provided, including: receiving, by a target network side device, a first message from a source network side device, where the first message includes a configuration of a first plane bearer, where the first plane bearer is configured to transmit data of a first plane, the first plane is configured to transmit data terminating at an internal node of a communication network, and the first plane is different from a control plane and a user plane; and the source network side device is a serving network side device of the terminal before cell handover, RRC reestablishment, or RRC resume, and the target network side device is a serving network side device of the terminal after the cell handover, the RRC reestablishment, or the RRC resume; and performing, by the target network side device, a first operation, where the first operation includes: inheriting the first plane bearer; or not considering the configuration of the first plane bearer as a configuration of the terminal, and/or deleting the configuration of the first plane bearer.

According to a third aspect, a communication processing method is provided, including: establishing, by a terminal, a first plane bearer with a source network side device; and in a case that the terminal performs cell handover, RRC reestablishment, or RRC resume, or enters an RRC deactivated state, deleting, by the terminal, the first plane bearer or maintaining the first plane bearer, where the first plane bearer is configured to transmit data of a first plane, the first plane is configured to transmit data terminating at an internal node of a communication network, and the first plane is different from a control plane and a user plane; and the source network side device is a serving network side device of the terminal before the cell handover, the RRC reestablishment, or the RRC resume.

According to a fourth aspect, a source network side device is provided, including: a bearer establishment module, configured to establish a first plane bearer with a terminal; and a processing module, configured to delete the first plane bearer or maintain the first plane bearer in a case that the terminal performs cell handover, RRC reestablishment, or RRC resume, where the first plane bearer is configured to transmit data of a first plane, the first plane is configured to transmit data terminating at an internal node of a communication network, and the first plane is different from a control plane and a user plane; and the source network side device is a serving network side device of the terminal before the cell handover, the RRC reestablishment, or the RRC resume.

According to a fifth aspect, a target network side device is provided, including: a receiving module, configured to receive a first message from a source network side device, where the first message includes a configuration of a first plane bearer, where the first plane bearer is configured to transmit data of a first plane, the first plane is configured to transmit data terminating at an internal node of a communication network, and the first plane is different from a control plane and a user plane; and the source network side device is a serving network side device of the terminal before cell handover, RRC reestablishment, or RRC resume, and the target network side device is a serving network side device of the terminal after the cell handover, the RRC reestablishment, or the RRC resume; and a processing module, configured to perform a first operation, where the first operation includes: inheriting the first plane bearer; or not considering the configuration of the first plane bearer as a configuration of the terminal, and/or deleting the configuration of the first plane bearer.

According to a sixth aspect, a terminal is provided, including: a bearer establishment module, configured to establish a first plane bearer with a source network side device; and a processing module, configured to delete the first plane bearer or maintain the first plane bearer in a case that the terminal performs cell handover, RRC reestablishment, or RRC resume, or enters an RRC deactivated state, where the first plane bearer is configured to transmit data of a first plane, the first plane is configured to transmit data terminating at an internal node of a communication network, and the first plane is different from a control plane and a user plane; and the source network side device is a serving network side device of the terminal before the cell handover, the RRC reestablishment, or the RRC resume.

According to a seventh aspect, a communication processing method is provided, including the following steps: a first radio access network device performs at least one of the following: (1) when an interface between the first radio access network device and a second radio access network device is established, receiving identification information of a first plane function connected to the second radio access network device; (2) obtaining, through the terminal, the identification information of the first plane function connected to the second radio access network device, where the second radio access network device is further configured to broadcast the identification information of the first plane function connected to the second radio access network device; and (3) receiving a first message from the second radio access network device, where the first message includes the identification information of the first plane function connected to the second radio access network device, the first message includes a handover request message or a retrieve context response message, the second radio access network device is a serving network side device of a terminal before cell handover, RRC reestablishment, or RRC resume, and the first radio access network device is a serving network side device of the terminal after the cell handover, the RRC reestablishment, or the RRC resume.

According to an eighth aspect, a terminal is provided. The terminal includes a processor and a memory. The memory stores a program or instructions executable on the processor. The program or the instructions, when executed by the processor, implement the steps of the method according to the third aspect.

According to a ninth aspect, a terminal is provided, including a processor and a communication interface. The communication interface is configured to establish a first plane bearer with a source network side device. The processor is configured to delete the first plane bearer or maintain the first plane bearer when the terminal performs cell handover, RRC reestablishment, or RRC resume, or enters an RRC deactivated state. The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume.

According to a tenth aspect, a network side device is provided. The network side device includes a processor and a memory. The memory stores a program or instructions executable on the processor. The program or the instructions, when executed by the processor, implement the steps of the method according to the first aspect or the second aspect.

According to an eleventh aspect, a network side device is provided, including a processor and a communication interface. The communication interface is configured to establish a first plane bearer with a terminal. The processor is configured to delete the first plane bearer or maintain the first plane bearer in a case that the terminal performs cell handover, RRC reestablishment, or RRC resume. Alternatively, the communication interface is configured to receive a first message from a source network side device. The first message includes a configuration of the first plane bearer. The processor is configured to perform a first operation. The first operation includes: inheriting the first plane bearer; or not considering the configuration of the first plane bearer as a configuration of the terminal, and/or deleting the configuration of the first plane bearer. The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume.

According to a twelfth aspect, a communication processing system is provided, including: a terminal and a network side device. The terminal may be configured to perform the steps of the method according to the third aspect, and the network side device may be configured to perform the steps of the methods according to the first aspect and the second aspect.

According to a thirteenth aspect, a readable storage medium is provided. The readable storage medium stores a program or instructions. The program or the instructions, when executed by a processor, implement the steps of the method according to any one of the first aspect to the third aspect.

According to a fourteenth aspect, a chip is provided. The chip includes a processor and a communication interface. The communication interface is coupled to the processor. The processor is configured to execute a program or instructions, to implement the steps of the method according to any one of the first aspect to the third aspect.

According to a fifth aspect, a computer program/program product is provided. The computer program/program product is stored in a storage medium. The computer program/program product is executed by at least one processor, to implement the steps of the method according to any one of the first aspect to the third aspect.

In the embodiments of this application, a source network side device establishes a first plane bearer with a terminal. In a case that the terminal performs cell handover, RRC reestablishment, or RRC resume, the source network side device may delete the first plane bearer or maintain the first plane bearer. In the embodiments of this application, the mobility of the first plane is supported, which is conducive to improving the communication performance.

### BRIEF DESCRIPTION OF THE DRAWINGS

FIG. 1 is a schematic diagram of a wireless communication system according to an embodiment of this application;
FIG. 2 is a schematic flowchart of a communication processing method according to an embodiment of this application;
FIG. 3 is a schematic flowchart of a communication processing method according to an embodiment of this application;
FIG. 4 is a schematic flowchart of a communication processing method according to an embodiment of this application;
FIG. 5 is a schematic flowchart of a communication processing method according to an embodiment of this application;
FIG. 6 is a schematic flowchart of a communication processing method according to an embodiment of this application;
FIG. 7 is a schematic flowchart of a communication processing method according to an embodiment of this application;
FIG. 8 is a schematic flowchart of a communication processing method according to an embodiment of this application;
FIG. 9 is a schematic flowchart of a communication processing method according to an embodiment of this application;
FIG. 10 is a schematic flowchart of a communication processing method according to an embodiment of this application;
FIG. 11 is a schematic flowchart of a communication processing method according to an embodiment of this application;
FIG. 12 is a schematic structural diagram of a terminal according to an embodiment of this application;
FIG. 13 is a schematic structural diagram of a source network side device according to an embodiment of this application;
FIG. 14 is a schematic structural diagram of a target network side device according to an embodiment of this application;
FIG. 15 is a schematic structural diagram of a communication device according to an embodiment of this application;
FIG. 16 is a schematic structural diagram of a terminal according to an embodiment of this application; and
FIG. 17 is a schematic structural diagram of a network side device according to an embodiment of this application.

### DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application without creative efforts shall fall within the protection scope of this application.

In the specification and claims of this application, terms "first" and "second" are used to distinguish between similar objects, but are unnecessarily used to describe a specific sequence or order. It may be understood that the terms used in such a way is interchangeable in proper circumstances, so that the embodiments of this application can be implemented in other sequences than the sequence illustrated or described herein. The objects distinguished by "first" and "second" are usually of one type, and a number of the objects is not limited, for example, there may be one or more than one first objects. In addition, "and/or" in the specification and claims represents at least one of the connected objects. The character "/" generally represents an "or" relationship between associated objects.

It should be noted that the technologies described in the embodiments of this application are not limited to a long term evolution (Long Term Evolution, LTE)/LTE-advanced (LTE-Advanced, LTE-A) system, or may be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. In the embodiments of this application, terms "system" and "network" are usually used interchangeably, and the technology described can be applied to the systems and radio technologies mentioned above, and can also be applied to other systems and radio technologies. The following descriptions describe a new radio (New Radio, NR) system for example purposes, and NR terms are used in most of the following descriptions, but the technologies may also be applied to applications other than an NR system application, such as a 6th generation (6^{th} Generation, 6G) communication system.

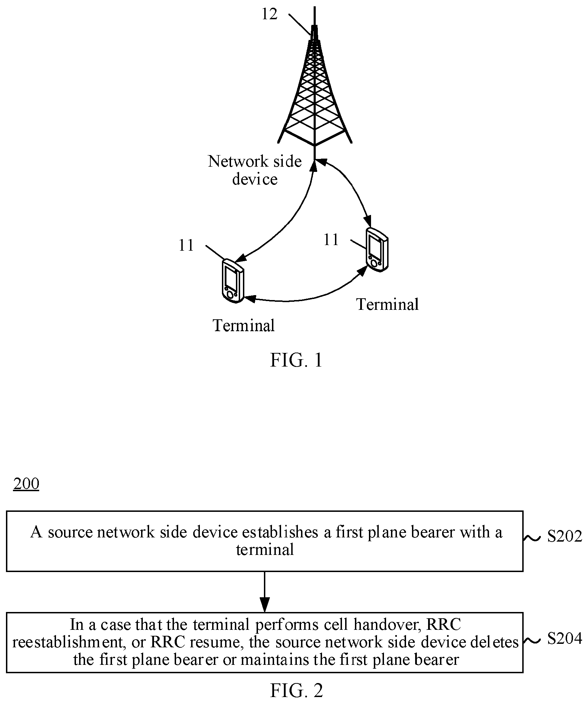

FIG. 1 is a block diagram of a wireless communication system to which an embodiment of this application is applicable. The wireless communication system includes a terminal 11 and a network side device 12. The terminal 11 may be a terminal side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook computer, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), smart home (a household device with a wireless communication function, such as a refrigerator, a television, a washing machine, or furniture), a game console, a personal computer (personal computer, PC), a teller machine, or an automated machine. The wearable devices include: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, and the like. It should be noted that a specific type of the terminal 11 is not limited in the embodiments of this application. The network side device 12 may include an access network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (evolved NodeB, eNB), an access point, a base transceiver station (Base Transceiver Station, BTS), a radio base station, a radio base station, a basic service set (Basic Service Set, BSS), an extended service set (Extended Service Set, ESS), a home NodeB, a home evolved NodeB, a transmission reception point (Transmitting Receiving Point, TRP), or another proper term in the art. Provided that the same technical effect is achieved, the base station is not limited to a specific technology vocabulary. It should be noted that in the embodiments of this application, the base station in the NR system is only used as an example for description, and a specific type of the base station is not limited.

A communication processing method provided in the embodiments of this application is described in detail below through some embodiments and application scenarios thereof with reference to the accompanying drawings.

As shown in FIG. 2, an embodiment of this application provides a communication processing method 200. The method may be performed by a source network side device. In other words, the method may be performed by software or hardware installed on the source network side device. The method includes the following steps.

S202: A source network side device establishes a first plane bearer with a terminal.

In the embodiments of this application, the source network side device may be a serving network side device of the terminal before cell handover, radio resource control (Radio Resource Control, RRC) reestablishment, or RRC resume. Correspondingly, the serving network side device of the terminal after the cell handover, the RRC reestablishment, or the RRC resume may be referred to as a target network side device.

The first plane bearer is configured to transmit data of a first plane, the first plane is configured to transmit data terminating at an internal node of a communication network, and the first plane is different from a control plane and a user plane. In other words, the first plane may be configured to transmit data terminating at the internal node of the communication network other than the user plane data (terminating outside the communication network) and the control plane data. In the embodiments of this application, the first plane may also be referred to as a data plane.

S204: In a case that the terminal performs cell handover, RRC reestablishment, or RRC resume, the source network side device deletes the first plane bearer or maintains the first plane bearer.

In this embodiment, for example, both the source network side device and the terminal autonomously delete the first plane bearer provided that the terminal performs the cell handover (that is, a primary cell is changed). After the cell handover, if necessary, the target network side device establishes the first plane bearer with the terminal again. This embodiment is simple to implement for the terminal and the network side device.

In this embodiment, for another example, for a scenario of intra-station cell handover, to be specific, a source serving cell and a target serving cell belong to a same network side device, in this case, the source network side device may maintain the first plane bearer. In this embodiment, the first plane bearer does not need to be reestablished, so that corresponding signaling and resource overheads can be reduced, and data loss can be reduced.

In this embodiment, for another example, for a scenario of inter-station cell handover, to be specific, a source serving cell and a target serving cell belong to different network side devices, in this case, in a case that the source network side device and the target network side device are connected to a same first plane function, the source network side device maintains the first plane bearer. In this embodiment, the first plane bearer does not need to be reestablished, so that corresponding signaling and resource overheads can be reduced, and data loss can be reduced. In a case that the source network side device and the target network side device are connected to different first plane functions, the source network side device deletes the first plane bearer. This embodiment is simple to implement for the terminal and the network side device.

In this embodiment, the first plane function is a logical entity, configured to exchange data of the first plane with the network side device or the terminal. One first plane function may be responsible for connecting one or more network side devices. The first plane function and the network side device may be directly connected, or may be connected through a core network device, for example, connected through a user plane function (User Plane Function, UPF) or an access and mobility management function (Access and Mobility Management Function, AMF).

In some examples, the first plane may be a data plane, the first plane bearer may be a data plane radio bearer (Data Plane Radio Bearer, DPRB), data of the data plane is transmitted through the DPRB, and the first plane function may be a data plane function (Data Plane Function, DPF).

According to the communication processing method provided in this embodiment of this application, the source network side device establishes the first plane bearer with the terminal. In a case that the terminal performs cell handover, RRC reestablishment, or RRC resume, the source network side device may delete the first plane bearer or maintain the first plane bearer. In this embodiment of this application, mobility of the first plane is supported, which is conducive to improving communication performance.

Optionally, the method provided in Embodiment 200 further includes the following steps: The source network side device sends a handover request message to a target network side device, where (1) the handover request message does not include a configuration of the first plane bearer; or (2) the handover request message includes a configuration of the first plane bearer. The target network side device does not use the configuration of the first plane bearer as a configuration of the terminal, and/or the target network side device deletes the configuration of the first plane bearer; and the target network side device is a serving network side device of the terminal after the cell handover, the RRC reestablishment, or the RRC resume.

This embodiment may be performed in a case that the source network side device deletes the first plane bearer, and the target network side device may reestablish the first plane bearer with the terminal.

Optionally, the method provided in Embodiment 200 further includes the following steps. The source network side device sends a first indication information to the terminal. The first indication information is used for indicating the terminal to delete the first plane bearer or maintain the first plane bearer.

In this embodiment, for example, in a case that the source network side device deletes the first plane bearer, the source network side device sends first indication information to the terminal. The first indication information is used for indicating the terminal to delete the first plane bearer. In this embodiment, for another example, in a case that the source network side device maintains the first plane bearer, the source network side device sends first indication information to the terminal. The first indication information is used for indicating the terminal to maintain the first plane bearer.

Optionally, when the first indication information is used for indicating the terminal to maintain the first plane bearer, an entity of a Layer 2 protocol layer corresponding to the first plane bearer is not reset or reestablished, to avoid data loss. The Layer 2 protocol layer includes, for example, a packet data convergence protocol (Packet Data Convergence Protocol, PDCP) layer, a radio link control (Radio Link Control, RLC) layer, or a medium access control (Medium Access Control, MAC) layer.

Optionally, in Embodiment 200, in a case that the source network side device maintains the first plane bearer, the method further includes: The source network side device sends a handover request message to a target network side device. The handover request message includes a configuration of the first plane bearer; and the target network side device is a serving network side device of the terminal after the cell handover, the RRC reestablishment, or the RRC resume.

In this embodiment, the target network side device can inherit the first plane bearer configured by the source network side device. Based on this, the target network side device may add, delete, or modify the first plane bearer, or the like.

The embodiment may further include the following step. The source network side device performs at least one of the following: (1) forwarding a downlink data packet that is not successfully acknowledged by the source network side device in the first plane bearer to the target network side device; and (2) forwarding an uplink data packet of the first plane bearer that is not in sequence to the target network side device. When this embodiment is performed, the source network side device may send a sequence number (Sequence Number, SN) status of the first plane bearer to the target network side device, and may further send data forwarding (Data forwarding) of the first plane bearer.

Optionally, based on Embodiment 200, that the source network side device deletes the first plane bearer or maintains the first plane bearer includes: the source network side device maintains the first plane bearer in a case that the source network side device and the target network side device are connected to a same first plane function; or the source network side device deletes the first plane bearer in a case that the source network side device and the target network side device are connected to different first plane functions, where the target network side device is a serving network side device of the terminal after the cell handover, the RRC reestablishment, or the RRC resume.

This embodiment may further include at least one of the following:
(1) When an interface between the source network side device and the target network side device is established, the source network side device receives identification information of the first plane function connected to the target network side device.
(2) The source network side device obtains, through the terminal, the identification information of the first plane function connected to the target network side device, where the target network side device is further configured to broadcast the identification information of the first plane function connected to the target network side device.

In this embodiment, the source network side device may obtain the identification information of the first plane function connected to the target network side device. The source network side device determines whether the source network side device and the target network side device are connected to the same first plane function, and then determines whether to delete the first plane bearer. If the source network side device deletes the first plane bearer, the source network side device usually does not send the configuration of the first plane bearer to the target network side device.

This embodiment may further include at least one of the following:
(1) The source network side device sends a handover request message to the target network side device, where the handover request message includes identification information of the first plane function connected to the source network side device, where the target network side device is a serving network side device of the terminal after the cell handover, the RRC reestablishment, or the RRC resume.
(2) The source network side device sends a retrieve context response message to the target network side device during the RRC reestablishment or the RRC resume initiated by the terminal, where the retrieve context response message includes the identification information of the first plane function connected to the source network side device, where the target network side device is a serving network side device of the terminal after the cell handover, the RRC reestablishment, or the RRC resume.

In this embodiment, the source network side device may alternatively always send the configuration of the first plane bearer to the target network side device. The target network side device obtains the identification information of the first plane function connected to the source network side device. The target network side device determines whether the target network side device and the source network side device are connected to the same first plane function, and then determines whether to delete the configuration of the first plane bearer.

To describe the communication processing method provided in this embodiment of this application in detail, the following describes the method with reference to several specific embodiments. In the following several embodiments, the first plane is a data plane, the first plane bearer is a DPRB, the first plane function is a DPF, the source network side device is a source base station, and the target network side device is a target base station.

### Embodiment 1

In this embodiment, when cell handover is performed, context related to a data plane is deleted.

Due to movement of a terminal, the terminal performs serving cell handover. The following scenarios may exist:
(1) Intra-station handover: A source serving cell and a target serving cell belong to a same base station.
(2) Inter-station handover: A target base station supports the data plane, and is connected to a same DPF as a source base station.
(3) Inter-station handover: The target base station supports the data plane, and is connected to a different DPF from the source base station.

A simplest solution is that both the base station and the terminal autonomously delete a DPRB provided that the cell handover is performed (that is, a primary cell is changed). After handover is performed, the target base station establishes the DPRB with the terminal again if needed.

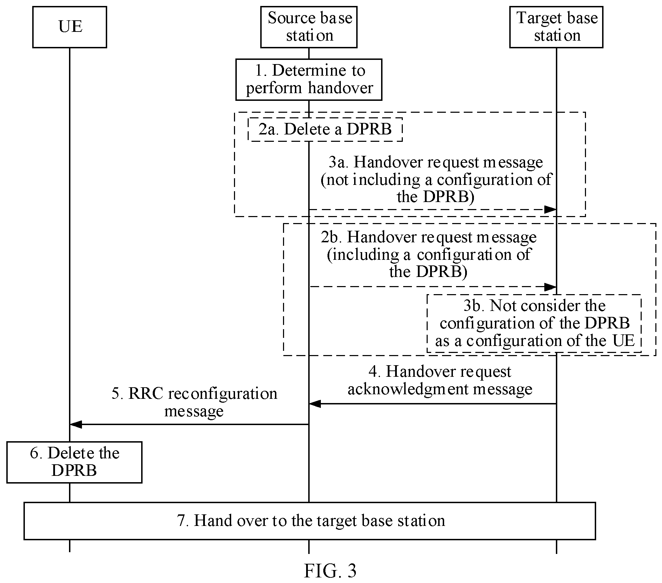

As shown in FIG. 3, this embodiment includes the following steps.

Step 1: The source base station determines to hand over the terminal to the target base station.

Subsequently, steps 2a and 3a may be performed; or steps 2b and 3b are performed.

Steps 2a and 3a: The source base station deletes a configuration of the DPRB in context of the terminal, and the configuration of the DPRB is not carried in a handover request (handover request) message sent to the target base station. Alternatively,

steps 2b and 3b: A configuration of the DPRB is carried in a handover request message sent by the source base station to the target base station, and the target base station does not use the configuration of the DPRB as a configuration of a UE (that is, the target base station considers configurations of DPRBs have been deleted by the UE).

Optionally, the target base station may refer to the configuration of the DPRB when a DPRB is added subsequently, or the target base station may directly delete the configurations of the DPRBs.

Step 4: The target base station sends a handover request acknowledgment (handover request ack) message to the source base station.

Step 5: The source base station sends an RRC reconfiguration message to the terminal (UE), indicating the UE to be handed over to a target cell.

Step 6: The terminal recognizes that handover is performed, and deletes the DPRB.

Step 7: The terminal hands over to the target base station.

Optionally, when necessary, the target base station may establish the DPRB with the terminal again subsequently.

### Embodiment 2

In this embodiment, the terminal may determine, based on first indication information, whether to delete the DPRB.

When the cell handover is performed, although it is the simplest solution that both the base station and the terminal autonomously delete the DPRB, data loss may be caused. Further enhancement may be made for the intra-station handover. To be specific, for the intra-station handover, the DPRB is continuously maintained. Otherwise (for example, for the inter-station handover), the DPRB is deleted.

However, from a perspective of the UE, the UE may not learn whether the scenario is the intra-station handover or the inter-station handover. In a solution, the base station sends the first indication information for indicating the terminal to continue to use the DPRB or delete the DPRB. The terminal determines, based on the first indication information, that the DPRB is continuously maintained, or determines, based on the first indication information, that the DPRB is deleted.

Optionally, if the DPRB continues to be used, an entity of an L2 protocol layer (for example, a PDCP layer, an RLC layer, or a MAC layer) corresponding to the DPRB bearer may not be reset (reset) or reestablished, to avoid the data loss.

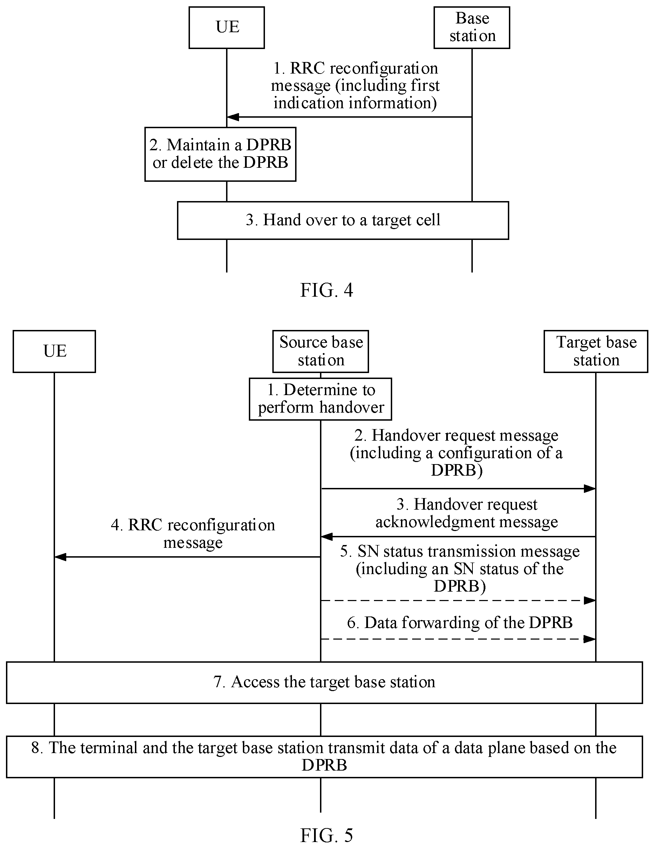

As shown in FIG. 4, this embodiment includes the following steps.

Step 1: The base station sends an RRC reconfiguration message to the terminal, where the RRC reconfiguration message indicates the terminal to be handed over to the target cell, and the RRC reconfiguration message includes first indication information.

Step 2: The terminal deletes the DPRB or maintains the DPRB based on the first indication information.

Step 3: The terminal hands over to the target cell.

Specifically, the first indication information may be used for indicating the terminal to continue to use the DPRB or delete the DPRB. For example, the first indication information is 1 bit, when a value is 1 or true (true), it indicates continuously maintaining the DPRB; and when the value is 0 or false (false), it indicates deleting the DPRB bearer; or when the first indication information is carried in the RRC reconfiguration message sent to the terminal, it indicates continuously maintaining the DPRB; and when the first indication information is not carried, it indicates deleting the DPRB; or when the first indication information is carried in the RRC reconfiguration message, it indicates deleting the DPRB; and when the first indication information is not carried, it indicates continuously maintaining the DPRB.

### Embodiment 3

In this embodiment, for an inter-station handover scenario, context of the DPRB may be transferred, and inter-DPF (inter-DPF) handover is recognized to delete a DPRB bearer.

An idea of Embodiment 1 is that the context of the DPRB is not transferred between base stations, but when inter-base station handover is performed, data loss may be caused. In this embodiment, during the inter-station handover, the configuration of the DPRB is transmitted between the base stations. The DPRB is still maintained, that is, the target base station inherits the DPRB configured on a source base station side. Based on this, the target base station may add, delete, or modify the DPRB.

As shown in FIG. 5, this embodiment includes the following steps.

Step 1: The source base station determines to hand over the terminal to the target base station.

Step 2: A configuration of the DPRB is carried in a handover request message sent by the source base station to the target base station.

Step 3: The target base station sends a handover request acknowledgment (handover request ack) message to the source base station.

Step 4: The source base station sends an RRC reconfiguration message to the terminal (UE), indicating the UE to be handed over to a target cell.

Step 5: The source base station sends an SN status transmission message to the target base station, including an SN status of the DPRB.

Step 6: The source base station sends data forwarding of the DPRB to the target base station.

Step 7: The terminal accesses the target base station.

Step 8: The terminal and the target base station transmit data of the data plane based on the DPRB.

Step 5 and step 6 are optional steps, and are intended to forward downlink data packets of the DPRB that are not successfully acknowledged by the source base station to the target base station, and/or forward uplink data packets of the DPRB that are not in sequence to the target base station, to avoid the data loss. If step 6 is not performed, when the handover is performed, data in the DPRB at L2 is directly discarded.

For inter-station handover, the target base station and the source base station may be connected to a same DPF, or may be connected to different DPFs. If the target base station and the source base station are connected to the same DPF, the DPRB bearer may be continuously maintained according to the solution in FIG. 5; or if the target base station and the source base station are connected to different DPFs, that is, inter-PDF handover is performed, considering that different DPFs have different data obtaining policies, the DPRB established in the source base station needs to be deleted. Therefore, it is necessary to identify whether the target base station and the source base station are connected to the same DPF. In other words, it is necessary to identify whether intra-DPF (intra-DPF) handover or the inter-DPF (inter-DPF) handover is performed. The following methods may be used, including Method 1 to Method 4.

Method 1: In the handover request message, the source base station sends a DPF identifier (ID) connected to the source base station to the target base station, and the target base station determines whether the target base station and the source base station are connected to the same DPF ID, to identify whether the inter-DPF handover is performed.

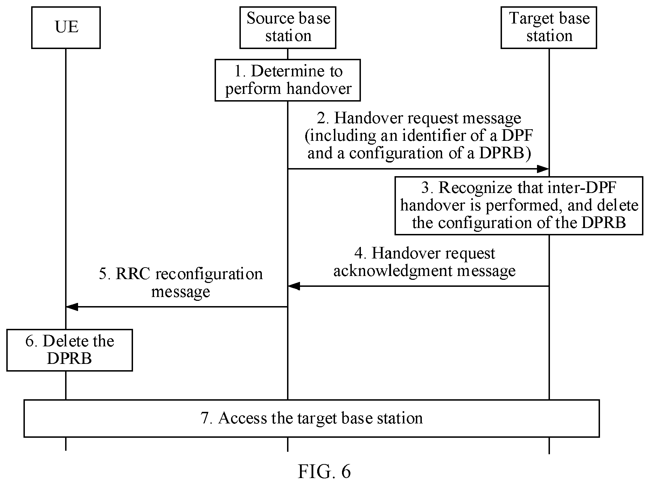

As shown in FIG. 6, this embodiment includes the following steps.

Step 1: The source base station determines to hand over the terminal to the target base station.

Step 2: A handover request message sent by the source base station to the target base station carries: an identifier of a DPF connected to the source base station; and a configuration of a DPRB.

Step 3: The target base station recognizes that the inter-DPF handover is performed, and deletes the configuration of the DPRB.

Step 4: The target base station sends a handover request acknowledgment message to the source base station, including DPRB release information.

Step 5: The source base station sends an RRC reconfiguration message to the terminal, indicating the UE to be handed over to a target cell, where the RRC reconfiguration message includes the DPRB release information.

Step 6: The terminal deletes (or releases) the DPRB.

Step 7: The terminal accesses the target base station.

In other embodiments, for an RRC reestablishment process, the target base station and the source base station between which reestablishment is initiated by the UE may alternatively be connected to different DPFs. The source base station may send the ID of the DPF connected to the source base station to the target base station in a retrieve context response message. When the target base station finds that the DPF connected to the target base station is different from the DPF connected to the source base station, the target base station may subsequently delete the configuration of the DPRB accordingly.

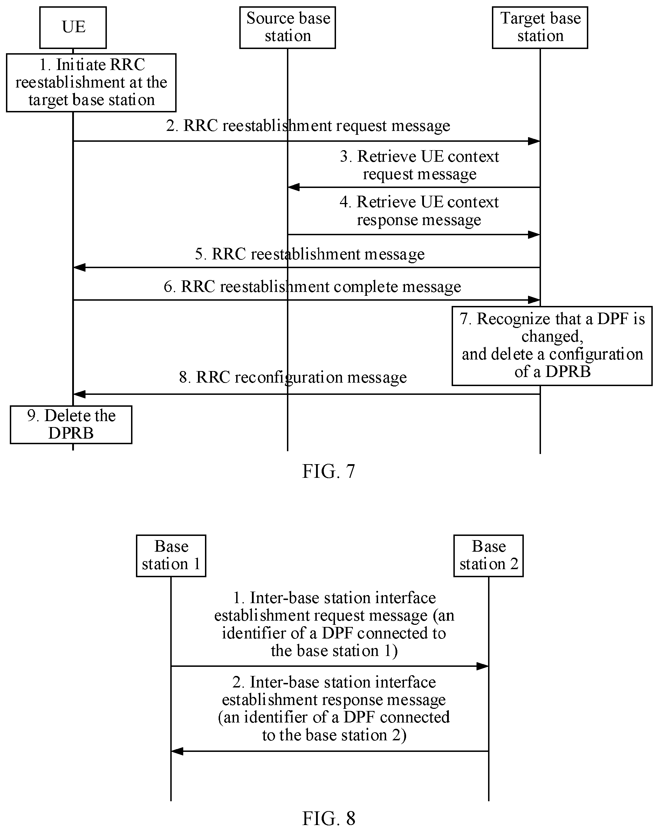

As shown in FIG. 7, this embodiment includes the following steps.

Step 1: The terminal initiates an RRC reestablishment process at the target base station.

Step 2: The terminal sends an RRC reestablishment request message to the target base station.

Step 3: The target base station sends a retrieve UE context request message to the source base station.

Step 4: The source base station sends a retrieve UE context response message to the target base station, including: an identifier of a DPF connected to the source base station; and a configuration of a DPRB.

Step 5: The target base station sends the RRC reestablishment message to the terminal.

Step 6: The terminal sends an RRC reestablishment completion message to the target base station.

Step 7: The target base station recognizes that the DPF changes, and deletes the configuration of the DPRB.

Step 8: The target base station sends an RRC reconfiguration message to the terminal, including DPRB release information.

Step 9: The terminal deletes (or releases) the DPRB.

In other embodiments, when the UE enters an inactive (inactive) state, a method used is that the network side device and the terminal each release the DPRB autonomously. Another method is to maintain the configuration of the DPRB. For the latter, when the terminal initiates an RRC resume process at the target base station, similar to the process of the RRC reestablishment, the source base station may send the ID of the DPF connected to the source base station to the target base station in the retrieve context response message. When the target base station finds that the DPF connected to the target base station is different from the DPF connected to the source base station, the target base station may subsequently delete the configuration of the DPRB accordingly.

Method 2: When an inter-base station interface (for example, an Xn interface) between two base stations is established, the two base stations exchange IDs of DPFs connected to the two base stations respectively.

As shown in FIG. 8, this embodiment includes the following steps.

Step 1: A base station 1 sends an inter-base station interface establishment request message to a base station 2, including an identifier of a DPF connected to the base station 1.

Step 2: The base station 2 sends an inter-base station interface establishment response message to the base station 1, including an identifier of a DPF connected to the base station 2.

When the terminal is handed over from the base station 1 to the base station 2, based on the ID of the DPF connected to the base station 1 obtained from the inter-base station interface establishment request message, the base station 2 may learn whether the intra-DPF handover or the inter-DPF handover is performed. Similarly, when the terminal is handed over from the base station 2 to the base station 1, based on the ID of the PDF connected to the base station 2 obtained from the inter-base station interface establishment response message, the base station 1 may learn whether the intra-DPF handover or the inter-DPF handover is performed.

It is possible that the inter-base station interface is not established between the source base station and the target base station, and a possible method is as follows.

Method 3: Each base station broadcasts an ID of a DPF connected to the base station, and a base station 1 (the source base station) obtains, through the UE, an ID of a DPF connected to a base station 2 (the target base station).

Specifically, the base station 1 sends a first RRC message to the UE. The first RRC message indicates the UE to report information of a specified cell serving the base station 2. The UE reads system information of the specified cell, to obtain the information of the specified cell. The information may include DPF ID information of the DPF connected to the base station 2 to which the specified cell belongs. The UE reports the information of the specified cell to the base station 1, so that the base station 1 can obtain the DPF ID of the DPF connected to the base station 2.

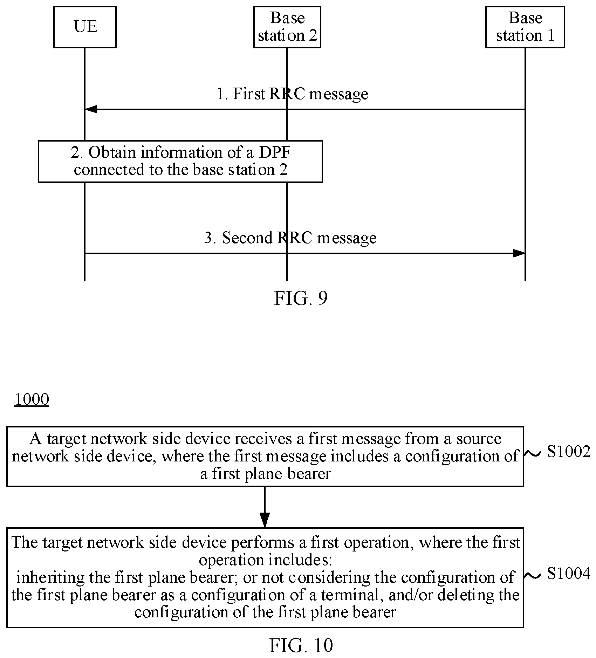

As shown in FIG. 9, this embodiment includes the following steps.

Step 1: The base station 1 sends the first RRC message to the terminal, indicating the terminal to report the information of the specified cell serving the base station 2.

Step 2: The terminal reads the information of the specified cell, including identification information of the DPF connected to the base station 2.

Step 3: The terminal sends a second RRC message to the base station 1, including the identification information of the DPF connected to the base station 2.

In FIG. 9, the first RRC message may be a message specifically used for obtaining information of a specified cell, and the second RRC message is a response message of the first RRC message. Alternatively, similar to those in a 5th generation (5^{th} Generation, 5G) system, the first RRC message is an RRC reconfiguration message carrying a report Cell Global Identifier (report Cell Global Identifier, reportCGI) indication, and the second RRC message is a measurement report message.

The communication processing method according to embodiments of this application is described in detail above with reference to FIG. 2 to FIG. 9. A communication processing method according to another embodiment of this application is described in detail below with reference to FIG. 10. It may be understood that this embodiment is the same as or corresponds to the descriptions of the source network side device in the method shown in FIG. 2 to FIG. 9. To avoid repetition, related descriptions are appropriately omitted.

FIG. 10 is a schematic flowchart of implementation of a communication processing method according to an embodiment of this application, which may be applied to a target network side device. As shown in FIG. 10, a method 1000 includes the following steps.

S1002: A target network side device receives a first message from a source network side device, where the first message includes a configuration of a first plane bearer.

The first plane bearer is configured to transmit data of a first plane, the first plane is configured to transmit data terminating at an internal node of a communication network, and the first plane is different from a control plane and a user plane. The source network side device is a serving network side device of the terminal before cell handover, RRC reestablishment, or RRC resume, and the target network side device is a serving network side device of the terminal after the cell handover, the RRC reestablishment, or the RRC resume.

S1004: The target network side device performs a first operation, where the first operation includes: inheriting the first plane bearer; or not considering the configuration of the first plane bearer as a configuration of the terminal, and/or deleting the configuration of the first plane bearer.

In this embodiment of this application, the target network side device receives the first message from the source network side device. The first message includes the configuration of the first plane bearer. The target network side device may inherit the first plane bearer; or may not use the configuration of the first plane bearer as the configuration of the terminal and/or delete the configuration of the first plane bearer. In this embodiment of this application, mobility of the first plane is supported, which is conducive to improving communication performance.

Optionally, in an embodiment, that the target network side device performs the first operation includes: inheriting, by the target network side device, the first plane bearer in a case that the target network side device and the source network side device are connected to a same first plane function; and not considering, by the target network side device in a case that the target network side device and the source network side device are connected to different first plane functions, the configuration of the first plane bearer as the configuration of the terminal, and/or deleting the configuration of the first plane bearer.

Optionally, in an embodiment, the method further includes at least one of the following: (1) when an interface between the target network side device and the source network side device is established, the target network side device receives identification information of the first plane function connected to the source network side device; and (2) the target network side device obtains, through the terminal, the identification information of the first plane function connected to the source network side device, where the source network side device is further configured to broadcast the identification information of the first plane function connected to the source network side device.

It should be noted that this embodiment may be implemented based on the method 1000, or may be implemented as an independent embodiment (that is, not relying on the method 1000).

Optionally, in an embodiment, the first message includes the identification information of the first plane function connected to the source network side device.

Optionally, in an embodiment, the first message includes a handover request message or a retrieve context response message.

Optionally, in one embodiment, the first operation includes inheriting the first plane bearer. The method further includes: the target network side device receives at least one of the following from the source network side device: (1) downlink data that is not successfully acknowledged by the source network side device in the first plane bearer; and (2) an uplink data packet of the first plane bearer that is not in sequence.

This embodiment of this application further provides a communication processing method, including: a first radio access network device performs at least one of the following:
(1) when an interface between the first radio access network device and a second radio access network device is established, receiving identification information of a first plane function connected to the second radio access network device;
(2) obtaining, through the terminal, the identification information of the first plane function connected to the second radio access network device, where the second radio access network device is further configured to broadcast the identification information of the first plane function connected to the second radio access network device; and
(3) receiving a first message from the second radio access network device, where the first message includes the identification information of the first plane function connected to the second radio access network device, the first message includes a handover request message or a retrieve context response message.

The second radio access network device is a serving network side device of the terminal before cell handover, RRC reestablishment, or RRC resume, and the first radio access network device is a serving network side device of the terminal after the cell handover, the RRC reestablishment, or the RRC resume. For a role of the identification information of the first plane function, reference may be made to the descriptions of the other embodiments.

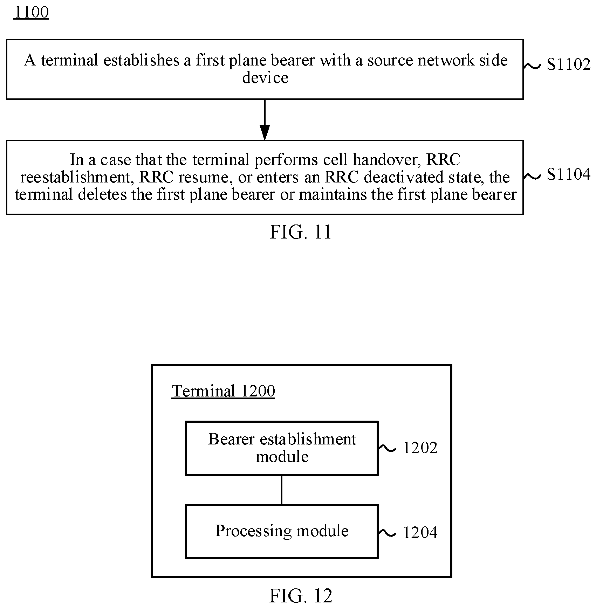

FIG. 11 is a schematic flowchart of implementation of a communication processing method according to an embodiment of this application, which may be applied to a terminal. As shown in FIG. 11, a method 1100 includes the following steps.

S1102: A terminal establishes a first plane bearer with a source network side device.

S1104: In a case that the terminal performs cell handover, RRC reestablishment, or RRC resume, or enters an RRC deactivated state, the terminal deletes the first plane bearer or maintains the first plane bearer.

The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume.

In this embodiment of this application, the terminal establishes the first plane bearer with the source network side device. In a case that the terminal performs cell handover, RRC reestablishment, or RRC resume, or enters the RRC deactivated state, the terminal deletes the first plane bearer or maintains the first plane bearer. In this embodiment of this application, mobility of the first plane is supported, which is conducive to improving communication performance.

Optionally, in an embodiment, the method further includes: the terminal receives first indication information, where the first indication information is used for indicating the terminal to delete the first plane bearer or maintain the first plane bearer, where that the terminal deletes the first plane bearer or maintains the first plane bearer includes: the terminal deletes the first plane bearer or maintains the first plane bearer according to the first indication information.

Optionally, in an embodiment, when the first indication information is used for indicating the terminal to maintain the first plane bearer, an entity of a Layer 2 protocol layer corresponding to the first plane bearer is not reset or reestablished.

Optionally, in an embodiment, the method further includes: the terminal obtains identification information of a first plane function connected to a target network side device; and the terminal sends the identification information of the first plane function to the source network side device.

FIG. 12 is a schematic structural diagram of a terminal according to an embodiment of this application. As shown in FIG. 12, a terminal 1200 includes the following modules.

A bearer establishment module 1202 is configured to establish a first plane bearer with a source network side device.

A processing module 1204 is configured to delete the first plane bearer or maintain the first plane bearer in a case that the terminal performs cell handover, RRC reestablishment, or RRC resume, or enters an RRC deactivated state.

The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume.

In this embodiment of this application, the terminal establishes the first plane bearer with the source network side device. In a case that the terminal performs cell handover, RRC reestablishment, or RRC resume, or enters an RRC deactivated state, the terminal deletes the first plane bearer or maintains the first plane bearer. In this embodiment of this application, mobility of the first plane is supported, which is conducive to improving communication performance.

Optionally, in an embodiment, the terminal further includes a receiving module, configured to receive first indication information. The first indication information is used for indicating the terminal to delete the first plane bearer or maintain the first plane bearer. The processing module 1204 is configured to delete the first plane bearer or maintain the first plane bearer according to the first indication information.

Optionally, in an embodiment, when the first indication information is used for indicating the terminal to maintain the first plane bearer, an entity of a Layer 2 protocol layer corresponding to the first plane bearer is not reset or reestablished.

Optionally, in an embodiment, the terminal further includes: a receiving module, configured to obtain identification information of a first plane function connected to a target network side device; and a sending module, configured to send the identification information of the first plane function to the source network side device.

The terminal 1200 according to this embodiment of this application may refer to procedures corresponding to the method 1100 according to the embodiments of this application. In addition, the units/modules in the terminal 1200 and other operations and/or functions described above are respectively intended to implement corresponding procedures in the method 1100 and can achieve the same or equivalent technical effects. For brevity, details are not described herein.

The terminal in the embodiments of this application may be an electronic device, for example, an electronic device having an operating system, or may be a component in the electronic device, for example, an integrated circuit or a chip. The electronic device may be a terminal or a device other than the terminal. For example, the terminal may include, but is not limited to, types of the terminal 11 listed above. Another device may be a server, network attached storage (Network Attached Storage, NAS), or the like. This is not specifically limited in the embodiments of this application.

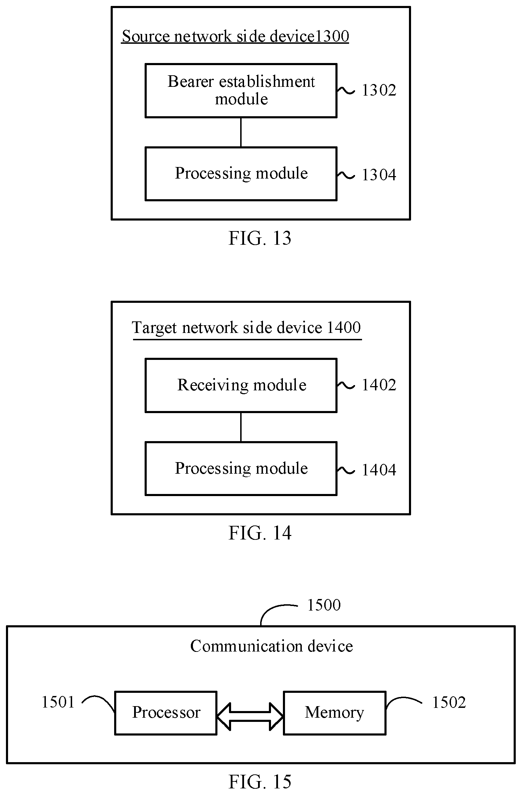

FIG. 13 is a schematic structural diagram of a source network side device according to an embodiment of this application. As shown in FIG. 13, the source network side device 1300 includes the following modules.

A bearer establishment module 1302 is configured to establish a first plane bearer with a terminal.

A processing module 1304 is configured to delete the first plane bearer or maintain the first plane bearer when the terminal performs cell handover, RRC reestablishment, or RRC resume.

The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume.

In this embodiment of this application, the source network side device establishes the first plane bearer with the terminal. In a case that the terminal performs cell handover, RRC reestablishment, or RRC resume, the source network side device may delete the first plane bearer or maintain the first plane bearer. In this embodiment of this application, mobility of the first plane is supported, which is conducive to improving communication performance.

Optionally, in an embodiment, the source network side device further includes a sending module, configured to send a handover request message to a target network side device. The handover request message does not include a configuration of the first plane bearer; or the handover request message includes a configuration of the first plane bearer. The target network side device does not use the configuration of the first plane bearer as a configuration of the terminal, and/or the target network side device deletes the configuration of the first plane bearer; and the target network side device is a serving network side device of the terminal after the cell handover, the RRC reestablishment, or the RRC resume.

Optionally, in an embodiment, the source network side device further includes a sending module, configured to send first indication information to the terminal. The first indication information is used for indicating the terminal to delete the first plane bearer or maintain the first plane bearer.

Optionally, in an embodiment, when the first indication information is used for indicating the terminal to maintain the first plane bearer, an entity of a Layer 2 protocol layer corresponding to the first plane bearer is not reset or reestablished.

Optionally, in an embodiment, the source network side device further includes a sending module, configured to send a handover request message to a target network side device in a case that the source network side device maintains the first plane bearer. The handover request message includes a configuration of the first plane bearer; and the target network side device is a serving network side device of the terminal after the cell handover, the RRC reestablishment, or the RRC resume.

Optionally, in an embodiment, the source network side device further includes a sending module, configured to perform at least one of the following: (1) forwarding a downlink data packet that is not successfully acknowledged by the source network side device in the first plane bearer to the target network side device; and (2) forwarding an uplink data packet of the first plane bearer that is not in sequence to the target network side device.

Optionally, in an embodiment, the processing module 1304 is configured to: maintain, by the source network side device, the first plane bearer in a case that the source network side device and the target network side device are connected to a same first plane function; or delete, by the source network side device, the first plane bearer in a case that the source network side device and the target network side device are connected to different first plane functions, where the target network side device is a serving network side device of the terminal after the cell handover, the RRC reestablishment, or the RRC resume.

Optionally, in an embodiment, the source network side device further includes a receiving module, configured to perform at least one of the following: (1) receiving, when an interface between the source network side device and the target network side device is established, identification information of the first plane function connected to the target network side device; and (2) obtaining, through the terminal, the identification information of the first plane function connected to the target network side device, where the target network side device is further configured to broadcast identification information of the first plane function connected to the target network side device.

Optionally, in an embodiment, the source network side device further includes a sending module, configured to perform at least one of the following: (1) sending a handover request message to a target network side device, where the handover request message includes identification information of a first plane function connected to the source network side device; and (2) sending a retrieve context response message to a target network side device during the RRC reestablishment or the RRC resume initiated by the terminal, where the retrieve context response message includes the identification information of a first plane function connected to the source network side device. the target network side device is a serving network side device of the terminal after the cell handover, the RRC reestablishment, or the RRC resume.

The source network side device 1300 according to this embodiment of this application, reference may be made to procedures corresponding to the method 200 in the embodiments of this application. In addition, the units/modules in the source network side device 1300 and the other operations and/or functions are respectively intended to implement corresponding procedures in the method 200, and the same or equivalent technical effects can be achieved. For brevity, details are not described herein.

FIG. 14 is a schematic structural diagram of a target network side device according to an embodiment of this application. As shown in FIG. 14, a target network side device 1400 includes the following modules.

A receiving module 1402 is configured to receive a first message from a source network side device, where the first message includes a configuration of a first plane bearer. The first plane bearer is configured to transmit data of a first plane, the first plane is configured to transmit data terminating at an internal node of a communication network, and the first plane is different from a control plane and a user plane. The source network side device is a serving network side device of the terminal before cell handover, RRC reestablishment, or RRC resume, and the target network side device is a serving network side device of the terminal after the cell handover, the RRC reestablishment, or the RRC resume.

A processing module 1404 is configured to perform a first operation, where the first operation includes: inheriting the first plane bearer; or not considering the configuration of the first plane bearer as a configuration of the terminal, and/or deleting the configuration of the first plane bearer.

In this embodiment of this application, the target network side device receives the first message from the source network side device. The first message includes the configuration of the first plane bearer. The target network side device may inherit the first plane bearer; or may not use the configuration of the first plane bearer as the configuration of the terminal and/or delete the configuration of the first plane bearer. In this embodiment of this application, mobility of the first plane is supported, which is conducive to improving communication performance.

Optionally, in an embodiment, the processing module 1404 is configured to: inherit the first plane bearer in a case that the target network side device and the source network side device are connected to a same first plane function; and not considering, in a case that the target network side device and the source network side device are connected to different first plane functions, the configuration of the first plane bearer as the configuration of the terminal, and/or delete the configuration of the first plane bearer.

Optionally, in an embodiment, the receiving module 1402 is further configured to perform at least one of the following: receiving, when an interface between the target network side device and the source network side device is established, identification information of the first plane function connected to the source network side device; and obtaining, through the terminal, identification information of the first plane function connected to the source network side device, where the source network side device is further configured to broadcast the identification information of the first plane function connected to the source network side device.

Optionally, in an embodiment, the first message includes the identification information of the first plane function connected to the source network side device.

Optionally, in an embodiment, the first message includes a handover request message or a retrieve context response message.

Optionally, in one embodiment, the first operation includes inheriting the first plane bearer. The receiving module 1402 is further configured to receive at least one of the following from the source network side device: (1) downlink data that is not successfully acknowledged by the source network side device in the first plane bearer; and (2) an uplink data packet of the first plane bearer that is not in sequence.

The target network side device 1400 according to this embodiment of this application, reference may be made to procedures corresponding to the method 1000 in the embodiments of this application. In addition, the units/modules in the target network side device 1400 and the other operations and/or functions are respectively intended to implement corresponding procedures in the method 1000, and the same or equivalent technical effects can be achieved. For brevity, details are not described herein.

Optionally, as shown in FIG. 15, an embodiment of this application further provides a communication device 1500, including a processor 1501 and a memory 1502. The memory 1502 has a program or instructions executable on the processor 1501 stored therein. For example, when the communication device 1500 is a terminal, the program or the instructions are executed by the processor 1501 to implement the steps in the embodiments of the communication processing method, and the same technical effects can be achieved. When the communication device 1500 is a network side device, the program or the instructions are executed by the processor 1501 to implement the steps in the embodiments of the communication processing method, and the same technical effects can be achieved. To avoid repetition, details are not described herein.

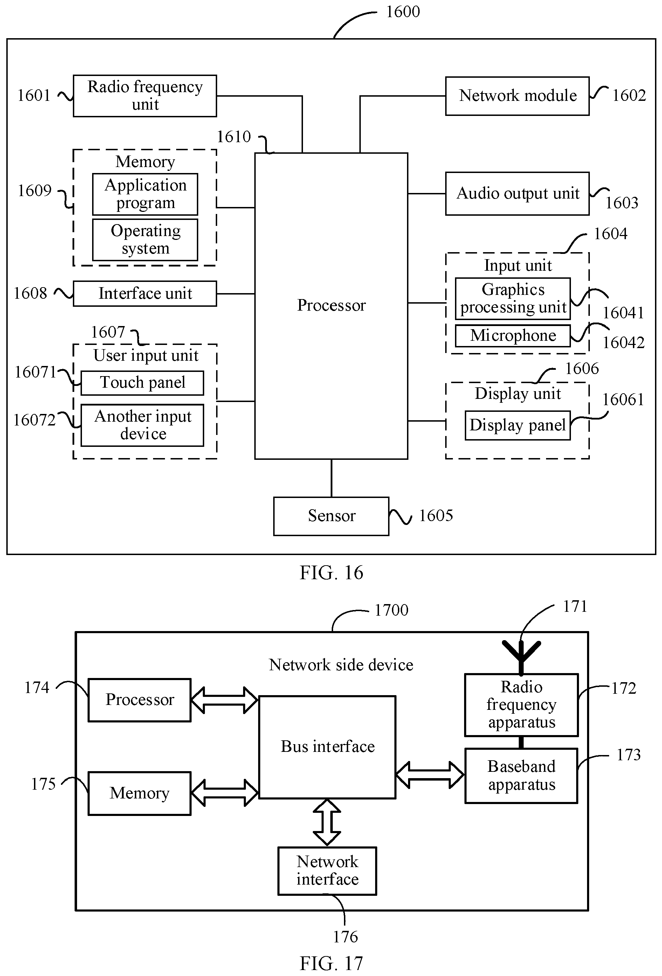

An embodiment of this application further provides a terminal, including a processor and a communication interface. The communication interface is configured to establish a first plane bearer with a source network side device. The processor is configured to delete the first plane bearer or maintain the first plane bearer when the terminal performs cell handover, RRC reestablishment, or RRC resume, or enters an RRC deactivated state. The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume. This terminal embodiment corresponds to the foregoing terminal side method embodiment. All implementation processes and implementations of the foregoing method embodiment may be applied to this terminal embodiment, and the same technical effects can be achieved. Specifically, FIG. 16 is a schematic structural diagram of hardware of a terminal implementing the embodiments of this application.

A terminal 1600 includes, but is not limited to: at least a part of components such as a radio frequency unit 1601, a network module 1602, an audio output unit 1603, an input unit 1604, a sensor 1605, a display unit 1606, a user input unit 1607, an interface unit 1608, a memory 1609 and a processor 1610.

A person skilled in the art may understand that the terminal 1600 may further include a power supply (such as a battery) for supplying power to the components. The power supply may be logically connected to the processor 1610 by a power management system, thereby implementing functions such as charging, discharging, and power consumption management by using the power management system. A terminal structure shown in FIG. 16 does not constitute a limitation on the terminal, and the terminal may include more or fewer components than shown, or combine some components, or have different component arrangements. This is not described herein.

It should be understood that in this embodiment of this application, the input unit 1604 may include a graphics processing unit (Graphics Processing Unit, GPU) 16041 and a microphone 16042. The graphics processing unit 16041 performs processing on image data of a static picture or a video that is obtained by an image acquisition device (for example, a camera) in a video acquisition mode or an image acquisition mode. The display unit 1606 may include a display panel 16061. The display panel 16061 may be configured in a form of a liquid crystal display, an organic light-emitting diode, or the like. The user input unit 1607 includes at least one of a touch panel 16071 and another input device 16072. The touch panel 16071 is also referred to as a touch screen. The touch panel 16071 may include two parts: a touch detection apparatus and a touch controller. The another input device 16072 may include, but is not limited to, a physical keyboard, a functional key (such as a volume control key or a switch key), a track ball, a mouse, and a joystick, which are not described herein.

In this embodiment of this application, after receiving downlink data from a network side device, the radio frequency unit 1601 may transmit the downlink data to the processor 1610 for processing. In addition, the radio frequency unit 1601 may send uplink data to the network side device. Generally, the radio frequency unit 1601 includes, but is not limited to, an antenna, an amplifier, a transceiver, a coupler, a low noise amplifier, a duplexer, and the like.

The memory 1609 may be configured to store a software program or instructions and various data. The memory 1609 may mainly include a first storage area for storing a program or instructions and a second storage area for storing data. The first storage area may store an operating system, an application program or instructions required by at least one function (for example, a sound playback function and an image display function), and the like. In addition, the memory 1609 may include a volatile memory or a non-volatile memory, or the memory 1609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch-link dynamic random access memory (Synch link DRAM, SLDRAM), or a direct rambus random access memory (Direct Rambus RAM, DRRAM). The memory 1609 in this embodiment of this application includes, but is not limited to these memories and any other memory of a suitable type.

The processor 1610 may include one or more processing units. Optionally, the processor 1610 integrates an application processor and a modem. The application processor mainly processes operations involving an operating system, a user interface, an application program, and the like, and the modem processor mainly processes wireless communication signals, for example, a baseband processor. It may be understood that, the modem may alternatively not be integrated in the processor 1610.

The radio frequency unit 1601 may be configured to establish a first plane bearer with a source network side device.

The processor 1610 may be configured to delete the first plane bearer or maintain the first plane bearer in a case that the terminal performs cell handover, RRC reestablishment, or RRC resume, or enters an RRC deactivated state. The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume.

In this embodiment of this application, the terminal establishes the first plane bearer with the source network side device. In a case that the terminal performs cell handover, RRC reestablishment, RRC resume, or enters an RRC deactivated state, the terminal deletes the first plane bearer or maintains the first plane bearer. In this embodiment of this application, mobility of the first plane is supported, which is conducive to improving communication performance.

The terminal 1600 provided in this embodiment of this application may further implement the processes in the embodiments of the communication processing method, and the same technical effect can be achieved. To avoid repetition, details are not described herein.

An embodiment of this application further provides a network side device, including a processor and a communication interface. The communication interface is configured to establish a first plane bearer with a terminal. The processor is configured to delete the first plane bearer or maintain the first plane bearer in a case that the terminal performs cell handover, RRC reestablishment, or RRC resume. Alternatively, the communication interface is configured to receive a first message from a source network side device. The first message includes a configuration of the first plane bearer. The processor is configured to perform a first operation. The first operation includes: inheriting the first plane bearer; or not considering the configuration of the first plane bearer as a configuration of the terminal, and/or deleting the configuration of the first plane bearer. The first plane bearer is configured to transmit data of a first plane, the first plane is configured to transmit data terminating at an internal node of a communication network, and the first plane is different from a control plane and a user plane. The source network side device is a serving network side device of the terminal before the cell handover, the RRC reestablishment, or the RRC resume. This network side device embodiment corresponds to the foregoing network side device method embodiment. All implementation processes and implementations of the foregoing method embodiment may be applied to the network side device embodiment, and the same technical effects can be achieved.

Specifically, an embodiment of this application further provides a network side device. As shown in FIG. 17, the network side device 1700 includes: an antenna 171, a radio frequency apparatus 172, a baseband apparatus 173, a processor 174, and a memory 175. The antenna 171 is connected to the radio frequency apparatus 172. In an uplink direction, the radio frequency apparatus 172 receives information through the antenna 171, and sends the received information to the baseband apparatus 173 for processing. In a downlink direction, the baseband apparatus 173 processes to-be-sent information and send the information to the radio frequency apparatus 172. The radio frequency apparatus 172 processes received information and sends the information through the antenna 171.

The method performed by the network side device in the foregoing embodiments may be implemented in the baseband apparatus 173. The baseband apparatus 173 includes a baseband processor.

The baseband apparatus 173, for example, may include at least one baseband board. A plurality of chips are disposed on the baseband board. As shown in FIG. 17, one chip is, for example, a baseband processor, and is connected to the memory 175 through a bus interface, to invoke a program in the memory 175, performing operations of the network device shown in the foregoing method embodiments.

The network side device may further include a network interface 176. The interface is, for example, a common public radio interface (common public radio interface, CPRI).

Specifically, the network side device 1700 in this embodiment of the present invention further includes: instructions or a program stored in the memory 175 and executable on the processor 174. The processor 174 invokes the instructions or the program in the memory 175 to perform the method performed by the modules shown in FIG. 13 or FIG. 14, and achieves the same technical effect. To avoid repetition, details are not described herein.

An embodiment of this application further provides a readable storage medium. The readable storage medium has a program or instructions stored therein. The program or the instructions, when executed by a processor, implement the processes in the embodiments of the communication processing method and achieve the same technical effects. To avoid repetition, details are not described herein.

The processor is the processor in the terminal described in the foregoing embodiments. The readable storage medium includes a computer-readable storage medium, such as a computer read-only memory ROM, a random access memory RAM, a magnetic disk, an optical disc, or the like.

An embodiment of this application further provides a chip. The chip includes a processor and a communication interface. The communication interface is coupled to the processor. The processor is configured to execute a program or instructions, to implement the processes in the embodiments of the communication processing method and achieve the same technical effects. To avoid repetition, details are not described herein.

It should be understood that the chip mentioned in the embodiments of this application may also be referred to as a system-level chip, a system chip, a chip system, a system on a chip, or the like.

An embodiment of this application further provides a computer program/program product. The computer program/program product is stored in the storage medium. The computer program/program product is executed by at least one processor, to implement the processes in the embodiments of the communication processing method, and the same technical effects can be achieved. To avoid repetition, details are not described herein.

An embodiment of this application further provides a communication processing system, including: a terminal and a network side device. The terminal may be configured to perform the steps of the communication processing method described above, and the network side device may be configured to perform the steps of the communication processing method described above.

It should be noted that terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the method and apparatus in the implementations of this application is not limited to performing functions in the order shown or discussed, and may further include performing functions in a substantially simultaneous manner or in a reverse order according to the functions involved. For example, the described methods may be performed in an order different from the described order, and various steps may be added, omitted, or combined. In addition, features described referring to some examples may be combined in other examples.

Through the descriptions of the foregoing implementations, a person skilled in the art may clearly understand that the methods in the foregoing embodiments may be implemented by software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for indicating a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the scope of protection of the claims.

## Claims

1. A communication processing method, comprising:
establishing (S202), by a source network side device, a first plane bearer with a terminal; and
in a case that the terminal performs cell handover, radio resource control, RRC, reestablishment, or RRC resume, deleting (S204), by the source network side device, the first plane bearer or maintaining (S204) the first plane bearer, wherein
the first plane bearer is configured to transmit data of a first plane, the first plane is configured to transmit data terminating at an internal node of a communication network, and the first plane is different from a control plane and a user plane; and the source network side device is a serving network side device of the terminal before the cell handover, the RRC reestablishment, or the RRC resume.

2. The method according to claim 1, wherein the method further comprises: sending, by the source network side device, a handover request message to a target network side device, wherein
the handover request message does not comprise a configuration of the first plane bearer; or
the handover request message comprises a configuration of the first plane bearer, wherein the target network side device does not use the configuration of the first plane bearer as a configuration of the terminal, and/or the target network side device deletes the configuration of the first plane bearer; and
the target network side device is a serving network side device of the terminal after the cell handover, the RRC reestablishment, or the RRC resume.

3. The method according to claim 1, wherein the method further comprises: sending, by the source network side device, first indication information to the terminal, wherein
the first indication information is used for indicating the terminal to delete the first plane bearer or maintain the first plane bearer.

4. The method according to claim 3, wherein when the first indication information is used for indicating the terminal to maintain the first plane bearer, an entity of a Layer 2 protocol layer corresponding to the first plane bearer is not reset or reestablished.

5. The method according to claim 1, wherein in a case that the source network side device maintains the first plane bearer, the method further comprises: sending, by the source network side device, a handover request message to a target network side device, wherein
the handover request message comprises a configuration of the first plane bearer; and the target network side device is a serving network side device of the terminal after the cell handover, the RRC reestablishment, or the RRC resume.

6. The method according to claim 5, wherein the method further comprises: performing, by the source network side device, at least one of the following:
forwarding a downlink data packet that is not successfully acknowledged by the source network side device in the first plane bearer to the target network side device; and
forwarding an uplink data packet of the first plane bearer that is not in sequence to the target network side device

7. The method according to claim 1, wherein the deleting (S204), by the source network side device, the first plane bearer or maintaining (S204) the first plane bearer comprises:
maintaining, by the source network side device, the first plane bearer in a case that the source network side device and the target network side device are connected to a same first plane function; or
deleting, by the source network side device, the first plane bearer in a case that the source network side device and the target network side device are connected to different first plane functions, wherein
the target network side device is a serving network side device of the terminal after the cell handover, the RRC reestablishment, or the RRC resume.

8. The method according to claim 7, wherein the method further comprises at least one of the following:
receiving, by the source network side device when an interface between the source network side device and the target network side device is established, identification information of the first plane function connected to the target network side device; and
obtaining, by the source network side device through the terminal, identification information of the first plane function connected to the target network side device, wherein the target network side device is further configured to broadcast the identification information of the first plane function connected to the target network side device.

9. The method according to claim 1, wherein the method further comprises at least one of the following:
sending, by the source network side device, a handover request message to a target network side device, wherein the handover request message comprises identification information of a first plane function connected to the source network side device; and
sending, by the source network side device, a retrieve context response message to a target network side device during the RRC reestablishment or the RRC resume initiated by the terminal, wherein the retrieve context response message comprises identification information of a first plane function connected to the source network side device, wherein
the target network side device is a serving network side device of the terminal after the cell handover, the RRC reestablishment, or the RRC resume.

10. A communication processing method, comprising
receiving (S1002), by a target network side device, a first message from a source network side device, wherein the first message comprises a configuration of a first plane bearer, wherein the first plane bearer is configured to transmit data of a first plane, the first plane is configured to transmit data terminating at an internal node of a communication network, and the first plane is different from a control plane and a user plane; and the source network side device is a serving network side device of the terminal before cell handover, radio resource control, RRC, reestablishment, or RRC resume, and the target network side device is a serving network side device of the terminal after the cell handover, the RRC reestablishment, or the RRC resume; and
performing (S1004), by the target network side device, a first operation, wherein the first operation comprises:
inheriting the first plane bearer; or
not considering the configuration of the first plane bearer as a configuration of the terminal, and/or deleting the configuration of the first plane bearer.

11. The method according to claim 10, wherein the performing (S1004), by the target network side device, a first operation comprises:
inheriting, by the target network side device, the first plane bearer in a case that the target network side device and the source network side device are connected to a same first plane function; and
not considering, by the target network side device in a case that the target network side device and the source network side device are connected to different first plane functions, the configuration of the first plane bearer as the configuration of the terminal, and/or deleting the configuration of the first plane bearer.

12. The method according to claim 11, wherein the method further comprises at least one of the following:
receiving, by the target network side device when an interface between the target network side device and the source network side device is established, identification information of the first plane function connected to the source network side device; and
obtaining, by the target network side device through the terminal, identification information of the first plane function connected to the source network side device, wherein the source network side device is further configured to broadcast the identification information of the first plane function connected to the source network side device.

13. A communication processing method, comprising
establishing (S1102), by a terminal, a first plane bearer with a source network side device; and
in a case that the terminal performs cell handover, radio resource control, RRC, reestablishment, or RRC resume, or enters an RRC deactivated state, deleting (S1104), by the terminal, the first plane bearer or maintaining (S1104) the first plane bearer, wherein
the first plane bearer is configured to transmit data of a first plane, the first plane is configured to transmit data terminating at an internal node of a communication network, and the first plane is different from a control plane and a user plane; and the source network side device is a serving network side device of the terminal before the cell handover, the RRC reestablishment, or the RRC resume.

14. A terminal (1600), comprising a processor (1610) and a memory (1609), wherein the memory (1609) stores a program or instructions executable on the processor (1610), which, when executed by the processor (1610), cause the terminal to implement the steps of the method according to claim 13.

15. A network side device (1700), comprising a processor (174) and a memory (175), wherein the memory (175) stores a program or instructions executable on the processor (174), which, when executed by the processor (174), cause the device to implement the steps of the method according to any one of claims 1 to 9, or implements the steps of the method according to any one of claims 10 to 12.

## Patentansprüche

1. Ein Kommunikationsverarbeitungsverfahren, das Folgendes beinhaltet:
Einrichten (S202), durch eine quellennetzseitige Vorrichtung, eines Trägers einer ersten Ebene mit einem Endgerät; und
Löschen (S204), durch die quellennetzseitige Vorrichtung, des Trägers der ersten Ebene oder Aufrechterhalten (S204) des Trägers der ersten Ebene, falls das Endgerät eine Zellenübergabe, eine Funkressourcensteuerungswiederherstellung, RRC-Wiederherstellung, oder eine RRC-Wiederaufnahme durchführt, wobei der Träger der ersten Ebene konfiguriert ist, um Daten einer ersten Ebene zu übertragen, die erste Ebene konfiguriert ist, um Daten zu übertragen, die an einem internen Knoten eines Kommunikationsnetzes enden, und die erste Ebene sich von einer Steuerebene und einer Benutzerebene unterscheidet; und die quellennetzseitige Vorrichtung eine versorgende netzseitige Vorrichtung des Endgeräts vor der Zellenübergabe, der RRC-Wiederherstellung oder der RRC-Wiederaufnahme ist.

2. Verfahren gemäß Anspruch 1, wobei das Verfahren ferner Folgendes beinhaltet:
Senden, durch die quellennetzseitige Vorrichtung, einer Übergabeanforderungsnachricht an eine zielnetzseitige Vorrichtung, wobei die Übergabeanforderungsnachricht keine Konfiguration des Trägers der ersten Ebene beinhaltet; oder
die Übergabeanforderungsnachricht eine Konfiguration des Trägers der ersten Ebene beinhaltet, wobei die zielnetzseitige Vorrichtung die Konfiguration des Trägers der ersten Ebene nicht als eine Konfiguration des Endgeräts verwendet und/oder die zielnetzseitige Vorrichtung die Konfiguration des Trägers der ersten Ebene löscht; und
die zielnetzseitige Vorrichtung eine versorgende netzseitige Vorrichtung des Endgeräts nach der Zellenübergabe, der RRC-Wiederherstellung oder der RRC-Wiederaufnahme ist.

3. Verfahren gemäß Anspruch 1, wobei das Verfahren ferner Folgendes beinhaltet:
Senden, durch die quellennetzseitige Vorrichtung, erster Anzeigeinformationen an das Endgerät, wobei
die ersten Anzeigeinformationen verwendet werden, um dem Endgerät anzuzeigen, den Träger der ersten Ebene zu löschen oder den Träger der ersten Ebene aufrechtzuerhalten.

4. Verfahren gemäß Anspruch 3, wobei, wenn die ersten Anzeigeinformationen verwendet werden, um dem Endgerät anzuzeigen, den Träger der ersten Ebene aufrechtzuerhalten, eine Entität einer Schicht-2-Protokollschicht, die dem Träger der ersten Ebene entspricht, nicht zurückgesetzt oder wiederhergestellt wird.

5. Verfahren gemäß Anspruch 1, wobei das Verfahren, falls die quellennetzseitige Vorrichtung den Träger der ersten Ebene aufrechterhält, ferner Folgendes beinhaltet: Senden, durch die quellennetzseitige Vorrichtung, einer Übergabeanforderungsnachricht an eine zielnetzseitige Vorrichtung, wobei die Übergabeanforderungsnachricht eine Konfiguration des Trägers der ersten Ebene beinhaltet; und die zielnetzseitige Vorrichtung eine versorgende netzseitige Vorrichtung des Endgeräts nach der Zellenübergabe, der RRC-Wiederherstellung oder der RRC-Wiederaufnahme ist.

6. Verfahren gemäß Anspruch 5, wobei das Verfahren ferner Folgendes beinhaltet: Durchführen, durch die quellennetzseitige Vorrichtung, mindestens eines der Folgenden:
Weiterleiten eines Downlink-Datenpakets, das nicht erfolgreich durch die quellennetzseitige Vorrichtung in dem Träger der ersten Ebene bestätigt wird, an die zielnetzseitige Vorrichtung; und
Weiterleiten eines Uplink-Datenpakets des Trägers der ersten Ebene, das nicht in Reihenfolge ist, an die zielnetzseitige Vorrichtung.

7. Verfahren gemäß Anspruch 1, wobei das Löschen (S204), durch die quellennetzseitige Vorrichtung, des Trägers der ersten Ebene oder Aufrechterhalten (S204) des Trägers der ersten Ebene Folgendes beinhaltet:
Aufrechterhalten, durch die quellennetzseitige Vorrichtung, des Trägers der ersten Ebene, falls die quellennetzseitige Vorrichtung und die zielnetzseitige Vorrichtung mit einer gleichen Funktion der ersten Ebene verbunden sind; oder
Löschen, durch die quellennetzseitige Vorrichtung, des Trägers der ersten Ebene, falls die quellennetzseitige Vorrichtung und die zielnetzseitige Vorrichtung mit unterschiedlichen Funktionen der ersten Ebene verbunden sind, wobei die zielnetzseitige Vorrichtung eine versorgende netzseitige Vorrichtung des Endgeräts nach der Zellenübergabe, der RRC-Wiederherstellung oder der RRC-Wiederaufnahme ist.

8. Verfahren gemäß Anspruch 7, wobei das Verfahren ferner mindestens eines der Folgenden beinhaltet:
Empfangen, durch die quellennetzseitige Vorrichtung, wenn eine Schnittstelle zwischen der quellennetzseitigen Vorrichtung und der zielnetzseitigen Vorrichtung eingerichtet ist, von Identifikationsinformationen der Funktion der ersten Ebene, die mit der zielnetzseitigen Vorrichtung verbunden ist; und
Erhalten, durch die quellennetzseitige Vorrichtung über das Endgerät, von Identifikationsinformationen der Funktion der ersten Ebene, die mit der zielnetzseitigen Vorrichtung verbunden ist, wobei die zielnetzseitige Vorrichtung ferner konfiguriert ist, um die Identifikationsinformationen der Funktion der ersten Ebene, die mit der zielnetzseitigen Vorrichtung verbunden ist, rundzusenden.

9. Verfahren gemäß Anspruch 1, wobei das Verfahren ferner mindestens eines der Folgenden beinhaltet:
Senden, durch die quellennetzseitige Vorrichtung, einer Übergabeanforderungsnachricht an eine zielnetzseitige Vorrichtung, wobei die Übergabeanforderungsnachricht Identifikationsinformationen einer Funktion der ersten Ebene beinhaltet, die mit der quellennetzseitigen Vorrichtung verbunden ist; und
Senden, durch die quellennetzseitige Vorrichtung, einer Abrufkontextantwortnachricht an eine zielnetzseitige Vorrichtung während der RRC-Wiederherstellung oder der RRC-Wiederaufnahme, die durch das Endgerät initiiert wird, wobei die Abrufkontextantwortnachricht Identifikationsinformationen einer Funktion der ersten Ebene beinhaltet, die mit der quellennetzseitigen Vorrichtung verbunden ist, wobei die zielnetzseitige Vorrichtung eine versorgende netzseitige Vorrichtung des Endgeräts nach der Zellenübergabe, der RRC-Wiederherstellung oder der RRC-Wiederaufnahme ist.

10. Ein Kommunikationsverarbeitungsverfahren, das Folgendes beinhaltet:
Empfangen (S1002), durch eine zielnetzseitige Vorrichtung, einer ersten Nachricht von einer quellennetzseitigen Vorrichtung, wobei die erste Nachricht eine Konfiguration eines Trägers einer ersten Ebene beinhaltet, wobei der Träger der ersten Ebene konfiguriert ist, um Daten einer ersten Ebene zu übertragen, die erste Ebene konfiguriert ist, um Daten zu übertragen, die an einem internen Knoten eines Kommunikationsnetzes enden, und die erste Ebene sich von einer Steuerebene und einer Benutzerebene unterscheidet; und die quellennetzseitige Vorrichtung eine versorgende netzseitige Vorrichtung des Endgeräts vor einer Zellenübergabe, einer Funkressourcensteuerungswiederherstellung, RRC-Wiederherstellung, oder einer RRC-Wiederaufnahme ist, und die zielnetzseitige Vorrichtung eine versorgende netzseitige Vorrichtung des Endgeräts nach der Zellenübergabe, der RRC-Wiederherstellung oder der RRC-Wiederaufnahme ist; und
Durchführen (S1004), durch die zielnetzseitige Vorrichtung, einer ersten Operation, wobei die erste Operation Folgendes beinhaltet:
Übernehmen des Trägers der ersten Ebene; oder Nichtberücksichtigen der Konfiguration des Trägers der ersten Ebene als eine Konfiguration des Endgeräts und/oder Löschen der Konfiguration des Trägers der ersten Ebene.

11. Verfahren gemäß Anspruch 10, wobei das Durchführen (S1004), durch die zielnetzseitige Vorrichtung, einer ersten Operation Folgendes beinhaltet:
Übernehmen, durch die zielnetzseitige Vorrichtung, des Trägers der ersten Ebene, falls die zielnetzseitige Vorrichtung und die quellennetzseitige Vorrichtung mit einer gleichen Funktion der ersten Ebene verbunden sind; und
Nichtberücksichtigen, durch die zielnetzseitige Vorrichtung, falls die zielnetzseitige Vorrichtung und die quellennetzseitige Vorrichtung mit unterschiedlichen Funktionen der ersten Ebene verbunden sind, der Konfiguration des Trägers der ersten Ebene als die Konfiguration des Endgeräts und/oder Löschen der Konfiguration des Trägers der ersten Ebene.

12. Verfahren gemäß Anspruch 11, wobei das Verfahren ferner mindestens eines der Folgenden beinhaltet:
Empfangen, durch die zielnetzseitige Vorrichtung, wenn eine Schnittstelle zwischen der zielnetzseitigen Vorrichtung und der quellennetzseitigen Vorrichtung eingerichtet ist, von Identifikationsinformationen der Funktion der ersten Ebene, die mit der quellennetzseitigen Vorrichtung verbunden ist; und
Erhalten, durch die zielnetzseitige Vorrichtung über das Endgerät, von Identifikationsinformationen der Funktion der ersten Ebene, die mit der quellennetzseitigen Vorrichtung verbunden ist, wobei die quellennetzseitige Vorrichtung ferner konfiguriert ist, um die Identifikationsinformationen der Funktion der ersten Ebene, die mit der quellennetzseitigen Vorrichtung verbunden ist, rundzusenden.

13. Ein Kommunikationsverarbeitungsverfahren, das Folgendes beinhaltet:
Einrichten (S1102), durch ein Endgerät, eines Trägers einer ersten Ebene mit einer quellennetzseitigen Vorrichtung; und
Löschen (S1104), durch das Endgerät, des Trägers der ersten Ebene oder Aufrechterhalten (S1104) des Trägers der ersten Ebene, falls das Endgerät eine Zellenübergabe, eine Funkressourcensteuerungswiederherstellung, RRC-Wiederherstellung, oder eine RRC-Wiederaufnahme durchführt oder in einen RRCdeaktivierten Zustand eintritt, wobei
der Träger der ersten Ebene konfiguriert ist, um Daten einer ersten Ebene zu übertragen, die erste Ebene konfiguriert ist, um Daten zu übertragen, die an einem internen Knoten eines Kommunikationsnetzes enden, und die erste Ebene sich von einer Steuerebene und einer Benutzerebene unterscheidet; und die quellennetzseitige Vorrichtung eine versorgende netzseitige Vorrichtung des Endgeräts vor der Zellenübergabe, der RRC-Wiederherstellung oder der RRC-Wiederaufnahme ist.

14. Ein Endgerät (1600), das einen Prozessor (1610) und einen Speicher (1609) beinhaltet, wobei der Speicher (1609) ein Programm oder Anweisungen speichert, die auf dem Prozessor (1610) ausführbar sind und bei Ausführung durch den Prozessor (1610) das Endgerät veranlassen, die Schritte des Verfahrens gemäß Anspruch 13 zu implementieren.

15. Eine netzseitige Vorrichtung (1700), die einen Prozessor (174) und einen Speicher (175) beinhaltet, wobei der Speicher (175) ein Programm oder Anweisungen speichert, die auf dem Prozessor (174) ausführbar sind und bei Ausführung durch den Prozessor (174) die Vorrichtung veranlassen, die Schritte des Verfahrens gemäß einem der Ansprüche 1 bis 9 zu implementieren, oder die Schritte des Verfahrens gemäß einem der Ansprüche 10 bis 12 implementiert.

## Revendications

1. Un procédé de traitement de communication, comprenant :
l'établissement (S202), par un dispositif côté réseau source, d'un support de premier plan doté d'un terminal ; et
dans un cas où le terminal réalise un transfert cellulaire, un rétablissement de contrôle de ressources radio, RRC (*radio resource control*)*,* ou une reprise RRC, la suppression (S204), par le dispositif côté réseau source, du support de premier plan ou le maintien (S204) du support de premier plan, où
le support de premier plan est configuré pour transmettre des données d'un premier plan, le premier plan est configuré pour transmettre des données se terminant au niveau d'un nœud interne d'un réseau de communication, et le premier plan est différent d'un plan de contrôle et d'un plan utilisateur ; et le dispositif côté réseau source est un dispositif côté réseau de desserte du terminal avant le transfert cellulaire, le rétablissement RRC, ou la reprise RRC.

2. Le procédé selon la revendication 1, où le procédé comprend en outre : l'envoi, par le dispositif côté réseau source, d'un message de demande de transfert à un dispositif côté réseau cible, où
le message de demande de transfert ne comprend pas une configuration du support de premier plan ; ou
le message de demande de transfert comprend une configuration du support de premier plan, où le dispositif côté réseau cible n'utilise pas la configuration du support de premier plan comme configuration du terminal, et/ou le dispositif côté réseau cible supprime la configuration du support de premier plan ; et
le dispositif côté réseau cible est un dispositif côté réseau de desserte du terminal après le transfert cellulaire, le rétablissement RRC, ou la reprise RRC.

3. Le procédé selon la revendication 1, où le procédé comprend en outre : l'envoi, par le dispositif côté réseau source, de premières informations d'indication au terminal, où les premières informations d'indication sont utilisées pour indiquer au terminal de supprimer le support de premier plan ou de maintenir le support de premier plan.

4. Le procédé selon la revendication 3, où, lorsque les premières informations d'indication sont utilisées pour indiquer au terminal de maintenir le support de premier plan, une entité d'une couche de protocole de Couche 2 correspondant au support de premier plan n'est pas réinitialisée ou rétablie.

5. Le procédé selon la revendication 1, où, dans un cas où le dispositif côté réseau source maintient le support de premier plan, le procédé comprend en outre : l'envoi, par le dispositif côté réseau source, d'un message de demande de transfert à un dispositif côté réseau cible, où
le message de demande de transfert comprend une configuration du support de premier plan ; et le dispositif côté réseau cible est un dispositif côté réseau de desserte du terminal après le transfert cellulaire, le rétablissement RRC, ou la reprise RRC.

6. Le procédé selon la revendication 5, où le procédé comprend en outre : la réalisation, par le dispositif côté réseau source, d'au moins l'une des actions suivantes :
le réacheminement d'un paquet de données de liaison descendante qui n'est pas acquitté avec succès par le dispositif côté réseau source dans le support de premier plan jusqu'au dispositif côté réseau cible ; et
le réacheminement d'un paquet de données de liaison montante du support de premier plan qui n'est pas en séquence jusqu'au dispositif côté réseau cible.

7. Le procédé selon la revendication 1, où la suppression (S204), par le dispositif côté réseau source, du support de premier plan ou le maintien (S204) du support de premier plan comprend :
le maintien, par le dispositif côté réseau source, du support de premier plan dans un cas où le dispositif côté réseau source et le dispositif côté réseau cible sont connectés à une même fonction de premier plan ; ou
la suppression, par le dispositif côté réseau source, du support de premier plan dans un cas où le dispositif côté réseau source et le dispositif côté réseau cible sont connectés à des fonctions de premier plan différentes, où
le dispositif côté réseau cible est un dispositif côté réseau de desserte du terminal après le transfert cellulaire, le rétablissement RRC, ou la reprise RRC.

8. Le procédé selon la revendication 7, où le procédé comprend en outre au moins l'une des actions suivantes :
la réception, par le dispositif côté réseau source lorsqu'une interface entre le dispositif côté réseau source et le dispositif côté réseau cible est établie, d'informations d'identification de la fonction de premier plan connectée au dispositif côté réseau cible ; et
l'obtention, par le dispositif côté réseau source par l'intermédiaire du terminal,
d'informations d'identification de la fonction de premier plan connectée au dispositif côté réseau cible, où le dispositif côté réseau cible est en outre configuré pour diffuser les informations d'identification de la fonction de premier plan connectée au dispositif côté réseau cible.

9. Le procédé selon la revendication 1, où le procédé comprend en outre au moins l'une des actions suivantes :
l'envoi, par le dispositif côté réseau source, d'un message de demande de transfert à un dispositif côté réseau cible, où le message de demande de transfert comprend des informations d'identification d'une fonction de premier plan connectée au dispositif côté réseau source ; et
l'envoi, par le dispositif côté réseau source, d'un message de réponse de contexte de récupération à un dispositif côté réseau cible pendant le rétablissement RRC ou la reprise RRC lancé(e) par le terminal, où le message de réponse de contexte de récupération comprend des informations d'identification d'une fonction de premier plan connectée au dispositif côté réseau source, où
le dispositif côté réseau cible est un dispositif côté réseau de desserte du terminal après le transfert cellulaire, le rétablissement RRC, ou la reprise RRC.

10. Un procédé de traitement de communication, comprenant
la réception (S1002), par un dispositif côté réseau cible, d'un premier message en provenance d'un dispositif côté réseau source, où le premier message comprend une configuration d'un support de premier plan, où le support de premier plan est configuré pour transmettre des données d'un premier plan, le premier plan est configuré pour transmettre des données se terminant au niveau d'un nœud interne d'un réseau de communication, et le premier plan est différent d'un plan de contrôle et d'un plan utilisateur ; et le dispositif côté réseau source est un dispositif côté réseau de desserte du terminal avant un transfert cellulaire, un rétablissement de contrôle de ressources radio, RRC, ou une reprise RRC, et le dispositif côté réseau cible est un dispositif côté réseau de desserte du terminal après le transfert cellulaire, le rétablissement RRC, ou la reprise RRC ; et
la réalisation (S1004), par le dispositif côté réseau cible, d'une première opération, où la première opération comprend :
l'adoption du support de premier plan ; ou
la non-prise en compte de la configuration du support de premier plan comme configuration du terminal, et/ou la suppression de la configuration du support de premier plan.

11. Le procédé selon la revendication 10, où la réalisation (S1004), par le dispositif côté réseau cible, d'une première opération comprend :
l'adoption, par le dispositif côté réseau cible, du support de premier plan dans un cas où le dispositif côté réseau cible et le dispositif côté réseau source sont connectés à une même fonction de premier plan ; et
la non-prise en compte, par le dispositif côté réseau cible dans un cas où le dispositif côté réseau cible et le dispositif côté réseau source sont connectés à des fonctions de premier plan différentes, de la configuration du support de premier plan comme configuration du terminal, et/ou la suppression de la configuration du support de premier plan.

12. Le procédé selon la revendication 11, où le procédé comprend en outre au moins l'une des actions suivantes :
la réception, par le dispositif côté réseau cible lorsqu'une interface entre le dispositif côté réseau cible et le dispositif côté réseau source est établie, d'informations d'identification de la fonction de premier plan connectée au dispositif côté réseau source ; et
l'obtention, par le dispositif côté réseau cible par l'intermédiaire du terminal, d'informations d'identification de la fonction de premier plan connectée au dispositif côté réseau source, où le dispositif côté réseau source est en outre configuré pour diffuser les informations d'identification de la fonction de premier plan connectée au dispositif côté réseau source.

13. Un procédé de traitement de communication, comprenant
l'établissement (S1102), par un terminal, d'un support de premier plan doté d'un dispositif côté réseau source ; et
dans un cas où le terminal réalise un transfert cellulaire, un rétablissement de contrôle de ressources radio, RRC, ou une reprise RRC, ou entre dans un état désactivé RRC, la suppression (S1104), par le terminal, du support de premier plan ou le maintien (S1104) du support de premier plan, où
le support de premier plan est configuré pour transmettre des données d'un premier plan, le premier plan est configuré pour transmettre des données se terminant au niveau d'un nœud interne d'un réseau de communication, et le premier plan est différent d'un plan de contrôle et d'un plan utilisateur ; et le dispositif côté réseau source est un dispositif côté réseau de desserte du terminal avant le transfert cellulaire, le rétablissement RRC, ou la reprise RRC.

14. Un terminal (1600), comprenant un processeur (1610) et une mémoire (1609), où la mémoire (1609) stocke un programme ou des instructions exécutables sur le processeur (1610), qui, lorsqu'elles sont exécutées par le processeur (1610), amènent le terminal à mettre en œuvre les étapes du procédé selon la revendication 13.

15. Un dispositif côté réseau (1700), comprenant un processeur (174) et une mémoire (175), où la mémoire (175) stocke un programme ou des instructions exécutables sur le processeur (174), qui, lorsqu'elles sont exécutées par le processeur (174), amènent le dispositif à mettre en œuvre les étapes du procédé selon l'une quelconque des revendications 1 à 9, ou met en œuvre les étapes du procédé selon l'une quelconque des revendications 10 à 12.
